# EUROPÄISCHE PATENTSCHRIFT

(11) **EP 2 585 264 B1**
(45) Veröffentlichungstag und Bekanntmachung des Hinweises auf die Patenterteilung: **15.10.2014**
(21) Anmeldenummer: 11720726.6
(22) Anmeldetag: 18.05.2011
(51) Int. Cl.: B29C 49/04, B29C 49/22, B29B 11/10, B29B 11/14, B29K 105/00, B29K 105/26, B29K 23/00, B29K 25/00, B29K 27/00, B29K 27/06, B29K 67/00, B29K 77/00, B29D 22/00, B32B 1/02, B65D 1/02

(54) **PREFORM ZUR HERSTELLUNG VON KUNSTSTOFFBEHÄLTERN IN EINEM STRECKBLASPROZESS UND VERFAHREN ZUR HERSTELLUNG DES PREFORMS**
PREFORM FOR PRODUCING PLASTIC CONTAINERS IN A STRETCH BLOW MOULDING PROCESS AND METHOD FOR PRODUCING THE PREFORM
PRÉFORME POUR RÉALISER DES RÉCIPIENTS EN MATIÈRE PLASTIQUE DANS LE CADRE D'UN PROCESSUS D'ÉTIRAGE-SOUFFLAGE ET PROCÉDÉ POUR RÉALISER LA PRÉFORME

(30) Priorität: 24.06.2010 CH 10242010
(43) Veröffentlichungstag der Anmeldung: 01.05.2013
(73) Patentinhaber: Alpla Werke Alwin Lehner GmbH & Co. KG, 6971 Hard (AT)
(72) Erfinder: SIEGL, Robert, A-6850 Dornbirn (AT)
(74) Vertreter: Bohest AG Branch Ostschweiz
(86) Internationale Anmeldenummer: PCT/EP2011/002461
(87) Internationale Veröffentlichungsnummer: WO 2011/160748

(56) Entgegenhaltungen:
- EP-A1- 1 688 235
- WO-A1-91/08099
- US-A- 4 432 719
- US-A1- 2007 252 304

## Beschreibung

Die Erfindung betrifft einen Preform zur Herstellung von Kunststoffbehältern in einem Streckblasprozess gemäss dem Oberbegriff des Patentanspruchs 1. Die Erfindung betrifft auch ein Verfahren zur Herstellung des Preforms.

Ein grosse Zahl der heutzutage eingesetzten Kunststoffbehälter, insbesondere beispielsweise Kunststoffflaschen und dergleichen, wird in einem Streckblasprozess hergestellt. Bei diesem Verfahren wird ein sogenannter Preform, der meist eine röhrchenartige Gestalt besitzt, an seinem einen Längsende einen Boden und am anderen Längsende einen Halsbereich mit ausgeformten Gewindeabschnitten oder dergleichen aufweist, in eine Formkavität einer Blasform eingesetzt und durch ein mit Überdruck eingeblasenes Medium aufgeblasen. Dabei wird der Preform zusätzlich mit einem durch die Halsöffnung eingefahrenen Reckdorn in axiale Richtung gereckt. Nach diesem Reck-/Blasvorgang wird der fertige, streckverfestigte Kunststoffbehälter aus der Blasform entformt.

Die bekannten Preforms werden üblicherweise in einem Spritzgiessverfahren hergestellt. Bedingt durch den Spritzgiessverfahren können nur relativ dünnflüssige Materialien eingesetzt werden. Der am häufigsten für die Herstellung von Kunststoffbehältern im Streckblasprozess eingesetzte Rohstoff ist PET (Polyethylenterephthalat). PET weist die für den Spritzgiessprozess erforderliche niedrige Viskosität bei hohen Temperaturen um die 280°C auf, ist vielfach erprobt, und seine Eigenschaften sind hinlänglich bekannt. Leider haben Flaschen aus PET ausgesprochen schlechte Barriere Eigneschaften gegenüber Wasser und Licht, und das Einbringen von Barriereschichten ist komplex.

Bei Polyolefinen, meist PE oder PP, ist die Verarbeitung über den Extrusionsprozeß ohne einen Streckblasprozeß heute das übliche Verabeitungsverfahren für Flaschen.
Polyolefine jedoch weisen im anschliessenden Streckblasprozess keine optimale Streckverfestigung auf. Damit PET Behälter die erforderlichen mechanischen Festigkeiten (Stauchdruck, Innendruckfestigkeit, usw.) erreichen, sollten sie eine Mindestwandstärke von ca. 0,2 mm nicht unterschreiten. Aus ökologischen Gründen und infolge der hohen Rohstoffkosten besteht andererseits ein hohes Interesse daran, die Wandstärken der Kunststoffbehälter noch weiter zu verringern.

Preforms für im Streckblasprozess hergestellte Kunststoffbehälter weisen oft eine mehrschichtige Struktur auf. Beispielsweise sind Preforms mit drei oder mehreren Schichten bekannt, die beispielsweise Barriere- oder Getterschichten für Gase, lichtundurchlässige Schichten usw. umfassen. Es sind auch mehrschichtige Preforms bekannt, bei denen eine oder mehrere Schichten Regeneratmaterial enthalten. Um die unterschiedlichen Schichten miteinander zu verbinden, ist beispielsweise dem Basispolymer oder der Barriereschicht ein Haftvermittler als Blend oder als Copolymer beigemengt. Der Haftvermittler ist mehr oder weniger homogen in das Rohmaterial oder Barrierematerial integriert. Seine Wirkung entfaltet er jedoch nur an den Grenzflächen der miteinander zu verbindenden Schichten. Im übrigen Rohstoff ist er nicht von Nutzen und verschlechtert dort zum Teil die mechanischen oder Barriere Eigenschaften beträchtlich. Aus ökologischen Gründen und aus Kostengründen besteht jedoch ein Interesse daran, die Menge des Haftvermittlers zu reduzieren.

Bei der Herstellung der Preforms im Spritzgiessprozess treten üblicherweise Drücke von bis zu ca. 1000 bar in der Schmelze auf. Um die erforderlichen Schliesskräfte in vernünftigen Grenzen zu halten, weisen die Spritzgussformen oft nur wenige Kavitäten auf. Dies führt beispielsweise bei Preforms mit grossen Halsdurchmessern von 48 mm und mehr für sogenannte Weithalsflaschen mit relativ geringem Fassungsvermögen zu hohen Herstellkosten.

In der EP-1 344 618 A1 sind Preforms für den Einsatz in einem Streckblasprozess vorgeschlagen. Der Preform, dessen Herstellung nicht näher beschrieben ist, weist im Anschluss an den Stützring, der den Halsabschnitt des Preforms von dessen Körperabschnitt trennt, einen nach aussen gewölbten Schulterbereich auf. Die Innenfläche des Preforms ist im Bereich des Stützrings als eine Konusfläche ausgebildet, die sich in Richtung des kugeligen Bodens des Preforms erweitert. Die EP-1 344 618 A1 lehrt, den Preform mit einem Körperabschnitt auszubilden, der deutlich grössere Innen- und Aussendurchmesser aufweist als der Halsabschnitt. Dieser bekannte Preform wird bereits bei seiner Herstellung so stark verformt, dass eine weitere und schnelle axiale und radiale Orientierung im nachfolgenden Streckblasprozess zu gering ausfällt und nicht zur gewünschten Streckverfestigung des hergestellten Kunststoffbehälters führt.

In der US 2007/0252304 A1 sind ein Verfahren und ein System zur Herstellung mehrschichtiger Preforms in einem kombinierten Extrusions- und Pressformverfahren beschrieben. Bei diesem Verfahren wird zunächst ein Vorstufen-Preform durch geringfügiges Aufblasen eines extrudierten mehrschichtigen Kunststoffschlauchs hergestellt. Die Luft wird in den extrudierten Schlauch eingeblasen, um diesen soweit aufzuweiten, dass ein Pressskern in den Vorstufen-Preform eingefahren werden kann. Die endgültige Form des Preforms wird schliesslich in einem Pressformverfahren mit dem eingefahrenen Presskern erzeugt. Damit der Presskern wieder entformbar ist, darf der Preform an seiner Innenwandung keine Hinterschneidungen oder sonstige Strukturierungen aufweisen.

In der US 4,432,719 ist ebenfalls die Herstellung eines Preforms in einem kombinierten Extrusions- und Pressformverfahren beschrieben. Die eigentliche Formgebung des Preforms erfolgt durch das Pressformverfahren. Der derart erzeugte Preform weist eine unstrukturierte Innenwandung auf, damit der Presskern entformbar ist.

In der EP 1 688 235 A1 ist die Herstellung einer Griffflasche in einem Streckblasverfahren aus einem in einem Spritzgiessverfahren hergestellten Preform beschrieben.

Aufgabe der vorliegenden Erfindung ist es daher, einen Preform für die Verarbeitung in einem Streckblasprozess bereitzustellen, der den geschilderten Nachteilen der durch herkömmliche Verfahren hergestellten Preforms abhilft. Es soll ein Preform geschaffen wer-den, der es ermöglicht, daraus in einem Streckblasprozess Kunststoffbehälter herzustellen, die eine ausreichende Streckverfestigung aufweisen. Der Preform soll es auch erlauben, die Herstellkosten für Weithalsflaschen zu verringern. Weiters sollen die Voraussetzungen für eine einfache, kostengünstige und ökologisch akzeptable Herstellung von mehrschichtigen Preforms geschaffen werden, welche auch eine einfache Integration von Regeneratmaterial erlaubt.

Diese Aufgaben werden erfindungsgemäss gelöst durch einen Preform für die Herstellung von Kunststoffbehältern in einem Streckblasprozess mit den im Patentanspruch 1 aufgelisteten Merkmalen. Die Aufgaben werden auch durch ein Verfahren zur Herstellung des Preforms gelöst, wie es im unabhängigen Verfahrensanspruch definiert ist. Weiterbildungen sowie vorteilhafte und bevorzugte Ausführungsvarianten der Erfindung sind Gegenstand der abhängigen Vorrichtungs- bzw. Verfahrensansprüche.

Die Erfindung schlägt einen durch einen Quasi-Extrusionsblasprozess hergestellten Preform vor, der für die Herstellung von Kunststoffbehältern in einem Streckblasprozess ausgebildet ist und einen Halsabschnitt und einen mit einem Preformboden verschlossenen Körperabschnitt aufweist, die durch einen von der Aussenwandung abragenden Stützring voneinander getrennt sind. Zum Unterschied von den aus dem Stand der Technik bekannten Preforms weist der erfindungsgemässe Preform einen Körperabschnitt auf, dessen Aussendurchmesser sich vom Stützring in Richtung des Preformbodens verjüngt.

Durch die erfindungsgemässe Ausbildung des Preforms wird dieser bei seiner Herstellung durch Extrusionsblasen nur in einem sehr geringen Ausmass verformt. Anders als bei den bekannten Preforms, deren Körperabschnitt bei der Herstellung durch einen intensiven Innendruck deutlich erweitert wird, ist bei der Herstellung des erfindungsgemässen Preforms nur ein relativ geringer Stützdruck erforderlich, um den Körperabschnitt des Preforms gegen die Forminnenwandung zu drücken, wo er im erforderlichen Ausmass abgekühlt wird. Eine eigentliche radiale Verformung (Dehnung) des Körperabschnitts wird dadurch weitgehend vermieden. Obwohl der Preform durch die Extrusion hergestellt wird, findet der klassische Blasprozess nicht statt, sondern nur eine geringfügige Deformationen bedingt durch den Stützdruck.

Die in einem Quasi-Extrusionsblasprozess hergestellten Preforms weisen alle Vorteile des Extrusionsblasprozesses auf, ohne jedoch den Nachteil einer nur ungenügenden Streckverfestigung im nachfolgenden Streckblasprozess zu übernehmen. Allein schon der Übergang vom Spritzgiessverfahren zu dem Quasi-Extrusionsblasprozess verringert die Anlagekosten. Dies ist insbesondere für die Herstellung von Preforms mit grossen Halsdurchmessern für sogenannte Weithalsflaschen von Vorteil. Der Extrusionsblasprozess ist nicht wie das Spritzgiessverfahren auf die Verwendung von dünnflüssigen Rohmaterialien beschränkt, der fließtechnisch durch einen engen Anspritzpunkt mit hohem Druckverlust limitiert ist. Er erlaubt auch die Verarbeitung höherviskoser Materialien, deren grosse Makromoleküle eine besonders intensive Streckverfestigung bewirken. Auch die Herstellung mehrschichtiger Preforms kann ökologisch und ökonomisch vorteilhafter erfolgen, da die Extrusion mehrlagiger Strukturen relativ problemlos durchführbar ist, da diese nicht durch einen Anspritzpunkt geleitet werden müssen. Anstatt beispielsweise einen Haftvermittler in eine gesamte Schicht integrieren zu müssen, kann dieser als zusätzliche Schicht gezielt nur in die Grenzschicht eingearbeitet werden. Dadurch wird die Menge an Haftvermittler deutlich verringert. Auch Regeneratmaterial kann bei der Extrusion sehr einfach integriert werden.

Die geometrische Ausbildung des Preforms mit einem gegenüber dem Aussendurchmesser des Halsabschnitts verjüngt ausgebildeten Körperabschnitt gewährleistet, dass der Preform im Streckblasprozess in ausreichendem Masse axial und radial streckverfestigt wird. Dadurch weist der hergestellte Kunststoffbehälter bei gleichem Gewicht höhere mechanische Kennwerte, wie zum Beispiel Stauchdruckfestigkeit, Innendruckfestigkeit, usw., auf, als Kunststoffbehälter, die mit Preforms des Standes der Technik hergestellt worden sind. Dies ermöglicht es, die erfindungsgemässen Preforms im Sinne von Rohkosteneinsparungen hinsichtlich ihrer Wandstärken noch weiter zu optimieren, ohne dadurch bei den mechanischen Festigkeiten der hergestellten Kunststoffbehälter Abstriche machen zu müssen.

Im zweistufigen Steckblasprozess erfolgt die Herstellung der Preforms üblicherweise zeitlich und räumlich getrennt vom Streckblasen. Dabei vereinfacht die geometrische Ausbildung des Preforms mit einem gegenüber dem Aussendurchmesser des Halsabschnitts verjüngt ausgebildeten Körperabschnitt auch die Vereinzelung und Ausrichtung der üblicherweise als Schüttgut angelieferten Preforms. Diese erfolgt beispielsweise über zwei rotierende Walzen, die im Abstand voneinander angeordnet sind. Die Körperabschnitte der Preforms fallen durch den Spalt zwischen den beiden Walzen. Da die Spaltweite geringer ist als der über den Stützring gemessene Aussendurchmesser stützen sich die Preforms über den Stützring ab und können so zu weiteren Verarbeitungsstationen transportiert werden.

Für eine besonders gute Dehn- und Streckverfestigung beim Streckblasprozess weist der Körperabschnitt des Preforms eine axiale Länge auf, die etwa das 0,3-fache bis etwa 8-fache des Aussendurchmessers seines Halsabschnittes beträgt. Beispielsweise weist der Preformkörper eine axiale Länge von etwa 15 mm bis etwa 150 mm auf.

Aus herstelltechnischen Gründen aber auch aus Gründen der besseren Streckverfestigung erweist es sich als zweckmässig, wenn sich der Aussendurchmesser des Körperabschnittes des Preforms in Richtung des Preformbodens stetig verjüngt. Dabei schliesst die Aussenwandung des Körperabschnitts mit der Preformachse mit Vorteil einen Winkel von 0,5° bis 5° ein.

Für die Herstellung von Kunststoffflaschen mit den erforderlichen mechanischen Eigenschaften weist der Körperabschnitt des extrusionsgeblasenen Preforms eine Wandstärke von 0,4 mm bis 4 mm, vorzugsweise 1,8 mm bis 2,8 mm auf.

Je nach Art der herzustellenden Kunststoffbehälter und Einsatzzweck ist der Preform ein-oder mehrschichtig extrudiert.

Dabei weist der Preform wenigstens eine Schicht aus einem Kunststoff bzw. aus einem Kunststoffgemisch der Gruppe bestehend aus Polyolefinen, Polystyrolen, PVC, PVDC, Polyester, PLA (Polymilschsäuren) und Amiden auf. Diese Rohstoffe weisen oft grosse Makromoleküle auf, die sie für den Spritzgiessprozess ungeeignet machen, andererseits aber sehr vorteilhaft für die Streck- und Dehnverfestigung des im Streckblasverfahren aus dem Preform hergestellten Kunststoffbehälters sind.

In einer Ausführungsvariante des Preforms weist er wenigstens eine Schicht aus PET mit einer intrinsischen Viskosität grösser als 0,92 dl/g aber kleiner als 1,6 dl/g auf.

Eine andere zweckmässige Ausführungsvariante des Preforms sieht vor, dass er wenigstens eine Schicht aus mono-, bi- oder polymodalem HDPE oder Polypropylen aufweist. Beispielsweise weist der Preform wenigstens eine Schicht aus HDPE mit einem MFI 190°C 2,16 kg kleiner 0,1 g / 10 min bzw. MFI 190°C 21,6 kg kleiner 5 g / 10 min auf.

Eine weitere Variante des mehrschichtigen Preforms weist wenigstens eine Schicht mit Barriereadditiven, insbesondere Sauerstofffängern, Lichtbarrieren, Nanoclays oder UV-Blockern, auf. Alternativ oder in Ergänzung kann der Preform wenigstens eine Barriereschicht gegen Sauerstoff und/oder UV Strahlung und/oder eine Gleitbeschichtung und/oder eine Restentleerungsbeschichtung aufweisen. Der mehrschichtig extrudierte Preform kann auch wenigstens eine Schicht aus rezykliertem Kunststoffmaterial aufweisen. Der Extrusionsprozess ermöglicht es auch, den Preform wenigstens bereichsweise mit einer unterschiedlichen Farbschicht zu versehen. Dabei kann ein variabler Farbverlauf eingestellt werden oder es kann sogar ein quer und/oder längs gestreifter Preform hergestellt werden.

Eine weitere Ausführungsvariante des Preforms sieht vor, dass er einen im Körperabschnitt axial verlaufenden transparenten Sichtstreifen aufweist. Dieser kann am fertig streckgeblasenen Kunststoffbehälter beispielsweise als ein Füllstandskontrolle dienen.

In einer weiteren Ausführungsvariante des Preforms weist er einen Halsabschnitt mit einem Aussendurchmesser von wenigstens 48 mm auf. Derartige Preforms werden für die Herstellung von Weithalsbehältern benötigt und können einen Aussendurchmesser von bis zu 300 mm aufweisen. Das Extrusionsblasverfahren für die Preforms erlaubt auch eine kostengünstige Herstellung derartiger Behälter.

Preform nach einem der vorangehenden Ansprüche, dadurch gekennzeichnet, dass die Aussenwandung des Halsabschnittes mit Gewindeabschnitten oder dergleichen Verriegelungsvorsprüngen versehen ist. Der Halsabschnitt bleibt im anschliessenden Streckblasprozess unverändert und dient zur Befestigung eines Schraub-, Schnapp- oder Bajonettverschlusses oder dergleichen.

Zum Unterschied von den im Spritzgiessverfahren oder in einem Fliesspressverfahren hergestellten Preforms können bei dem quasi-extrusionsgeblasenen Preform die Gewindeabschnitte oder dergleichen Verriegelungsvorsprünge hohl ausgebildet sein. Dadurch wird Rohstoff eingespart.

In einer weiteren Ausführungsvariante des Preforms ist der Stützring, der den Halsabschnitt vom Körperabschnitt trennt, hohl ausgebildet. Die daraus resultierende Gewichts- bzw. Rohstoffeinsparung wirkt sich vorteilhaft auf die Herstellkosten der Preforms und damit der Kunststoffbehälter aus.

Zum Unterschied von den aus dem Stand der Technik bekannten extrusionsgeblasenen Preforms mit durchmessergrösseren Körperabschnitten wird der erfindungsgemässe Preform bei der Herstellung radial kaum aufgeweitet. Zur Ausbildung des Körperabschnittes mit einem Aussendurchmesser, der gegenüber einem Aussendurchmesser des Halsabschnittes vom Stützring in Richtung des Preformbodens verjüngt ausgebildet ist, wird der extrudierte und in die Formkavität eingelegte Schlauchabschnitt nur mit einem geringen Stützdruck gegen die Forminnenwandungen gedrückt. Eine Verformung des Preforms wird auf diese Weise weitgehend vermieden. Ein klassischer Blasprozess mit Innendrücken bis zu 50 bar und höher, wie er aus dem üblichen Extrusionsblasprozess bekannt ist, findet eigentlich gar nicht statt. Der für die Herstellung des erfindungsgemässen Preforms angewendete Stützdruck beträgt mit Vorteil nur 0,1 bar bis 8 bar.

Die erfindungsgemässen, quasi-extrusionsgeblasenen Preforms sind zur Herstellung von Kunststoffbehälter, insbesondere Kunststoffflaschen, in einem Einstufen- oder Zweistufen-Streckblasprozess. Unter einem Einstufen-Streckblasprozess wird dabei ein Verfahren verstanden, bei dem die Preforms unmittelbar nach ihrer Herstellung in die endgültige Form gebracht werden. Beim Zweistufen-Streckblasprozess erfolgt die Herstellung der Preforms zeitlich und räumlich getrennt vom Streckblasprozess, und die hergestellten Preforms werden bis zur ihrer Verwendung zwischengelagert.

Weitere Vorteile und Ausführungsvarianten der Erfindung ergeben sich aus der nachstehenden Beschreibung von Ausführungsbeispielen unter Bezugnahme auf die einzige schematische Zeichnung, die in nicht massstabsgetreuer Darstellung einen erfindungsgemässen, quasi-extrusionsgeblasenen Preform im Axialschnitt zeigt.

Bei dem schematisch dargestellten Preform, der gesamthaft das Bezugszeichen 1 trägt, handelt es sich um einen in einem Extrusionsblasprozess hergestellten Preform. Er weist einen Körperabschnitt 2 auf, dessen eines Längsende mit einem Preformboden 3 verschlossen ist. Der Preformboden 3 kann, wie beispielsweise dargestellt, die Form einer Kugelfläche aufweisen. In anderen Ausführungsvarianten der Preforms kann der Preformboden auch nach innen gewölbt sein. Eine weitere Ausführungsvariante des Preforms kann mit einem Preformboden ausgebildet sein, dessen Innenwandung und Aussenwandung eine flache Zerstreuungslinse begrenzen. In Verbindung mit einer geeigneten Brechzahl des Preformmaterials von 1,3 bis 1,6 führt die Gestaltung des Preformbodens als eine flache Zerstreuungslinse dazu, dass die für die Wiedererwärmung des Preforms vor dem eigentlichen Streckblasprozess eingestrahlte elektromagnetische Heizstrahlung von der Halterung für den Preform weg abgelenkt wird. Dadurch wird erreicht, dass bei der Wiedererwärmung ein grösserer Anteil der eingebrachten elektromagnetischen Wärmestrahlung im Preformboden und in der Wandung des Körperabschnitts absorbiert wird.

An den dem Preformboden 3 gegenüberliegenden Endabschnitt des Körperabschnitts 2 schliesst ein Halsabschnitt 4 an, der mit einer Einfüll- bzw. Ausgiessöffnung 5 versehen ist. An der Aussenwandung 41 des Halsabschnitts 4 sind Gewindeabschnitte 6 oder dergleichen Vorsprünge ausgebildet. Die Gewindeabschnitte 6 oder dergleichen Vorsprünge erlauben am fertig streckgeblasenen Behälter das Aufschrauben oder Befestigen eines mit korrespondierenden Verriegelungselementen ausgestatteten Verschlusses oder Deckels.

Der Körperabschnitt 2 und der Halsabschnitt 4 des Preforms 1 sind durch einen Stützring 7, der auch Transferring genannt wird, voneinander getrennt. Der Stützring 7 ragt am Übergang von der Aussenwandung 41 des Halsabschnitts 4 zu einer Aussenwandung 21 des Körperabschnitts 2 etwa radial ab.

Der Körperabschnitt 2 verjüngt sich vom Stützring 7 in Richtung des Preformbodens 3. Im dargestellten Ausführungsbeispiel ist der Körperabschnitt 2 stetig konisch ausgebildet. Andere Ausführungsvarianten des Preforms können beispielsweise einen Körperabschnitt aufweisen, der sich stufenförmig verjüngt. Eine weitere Ausführungsvariante des Preforms kann auch mit einem Körperabschnitt vorgesehen sein, der in Richtung des Preformbodens gekrümmt ausgebildet ist. Beispielsweise weist der Körperabschnitt am Übergang zum Preformboden einen kleineren Krümmungsradius auf, als am Übergang zum Halsabschnitt.

Im Fall des beispielsweise dargestellten Preforms 1 weist sein Körperabschnitt 2 einen Aussendurchmesser a auf, der sich in Richtung des Preformbodens 3 stetig verjüngt. Dabei schliesst die Aussenwandung 21 des Körperabschnitts 2 mit einer Achse A des Preforms 1 einen Winkel α von 0,5° bis 5° ein. Im Fall eines gestuft seinen Aussendurchmesser verändernden Körperabschnitts betrifft der angegebene Winkelbereich den Winkel, den eine gedachte Verbindungslinie vom Aussendurchmesser des Körperabschnitts unmittelbar unterhalb des Stützrings bis zum Aussendurchmesser des Körperabschnitts am Übergang zum Preformboden mit der Achse des Preforms einschliesst.

Der Körperabschnitt 2 des Preforms 1 besitzt eine axiale Länge I, die etwa das 0,3-fache bis 8-fache eines Aussendurchmessers d seines Halsabschnitts 4 beträgt. Die axiale Länge des Körperabschnitts 2 des Preforms 1 beträgt dabei beispielsweise etwa 15 mm bis etwa 150 mm.

Der Körperabschnitt 2 des extrusionsgeblasenen Preforms 1 weist eine mittlere Wandstärke w von 0,4 mm bis 4 mm, vorzugsweise 1,8 mm bis 2,8 mm auf.

Der extrusionsgeblasene Preform 1 kann ein- oder mehrschichtig aufgebaut sein. Dabei weist der Preform 1 wenigstens eine Schicht aus einem Kunststoff bzw. aus einem Kunststoffgemisch der Gruppe bestehend aus Polyolefinen, Polystyrolen, PVC, PVDC, Polyester, PLA (Polymilschsäuren) und Amiden auf. Diese Rohstoffe weisen meist grosse Makromoleküle auf, die sie für den Spritzgiessprozess ungeeignet machen, andererseits aber sehr vorteilhaft für die Streck- und Dehnverfestigung des im Streckblasverfahren aus dem Preform hergestellten Kunststoffbehälters sind.

Eine Ausführungsvariante des Preforms kann wenigstens eine Schicht aus PET mit einer intrinsischen Viskosität grösser als 0,92 dl/g aber kleiner als 1,6dl/g aufweisen. Eine weitere Ausführungsvariante des Preforms weist wenigstens eine Schicht aus mono-, bi- oder polymodalem HDPE oder Polypropylen auf. Beispielsweise weist der Preform wenigstens eine Schicht aus HDPE mit einem MFI (melt flow index) 190°C 2,16 kg kleiner 0,1 g / 10 min bzw. MFI 190°C 21,6 kg kleiner 5 g / 10 min auf.

Der Preform 1 ist durch Extrusionsblasen hergestellt. Dabei wird zunächst ein Schlauch durch den Ringspalt einer Extrusionsdüse extrudiert. Der Ringspalt weist üblicherweise eine Spaltweite von ca. 0,5mm bis 5 mm auf. Das Material wird bei der Extrusion sehr schonend behandelt, da "ins Freie" extrudiert wird und sich somit kein Gegendruck aufbaut. Beim Spritzgiessen hingegen, wird das Material durch einen Nadelverschluss in eine Spritzkavität eingespritzt, der einen Durchmesser von etwa 1,5 mm bis 5 mm aufweist. Die dabei auftretenden Spritzdrücke betragen 200 bar bis 2000 bar und erreichen ihren Höhepunkt, wenn die Spritzkavität ihren maximalen Füllstand erreicht und sich in der Form ein hoher Gegendruck aufbaut. Der dagen sehr schonend extrudierte Materialschlauch wird abschnittsweise in eine Form eingebracht und mit einem sehr geringen Stützdruck gegen die Forminnenwandungen gedrückt. Eine Verformung des Preforms 1 wird auf diese Weise weitgehend vermieden. Ein klassischer Blasprozess mit Innendrücken bis zu 50 bar und höher, wie er aus dem üblichen Extrusionsblasprozess bekannt ist, findet eigentlich gar nicht statt. Der für die Herstellung des erfindungsgemässen Preforms 1 angewendete Stützdruck beträgt lediglich etwa 0,1 bar bis 8 bar.

Der derart in einem Quasi-Extrusionsblasprozess hergestellte Preform 1 weist in seinem Halsabschnitt 4 eine Innenwandung 41 auf, die im Bereich 46 der Gewindeabschnitte 6 und im Bereich 47 des Stützrings 7 rillenartig vertieft ausgebildet ist. Die Gewindeabschnitte 6 und der Stützring 7 sind somit "hohl" ausgebildet. Dadurch wird Rohstoff eingespart.

Die Herstellung der erfindungsgemässen Preforms 1 in einem Quasi-Extrusionsblasprozess ermöglicht eine schonende Behandlung des Rohmaterials. Insbesondere mehrschichtige Preforms sind durch die Extrusion sehr kostengünstig herstellbar. Auf diese Weise sind beispielsweise mehrschichtige Preforms, die wenigstens eine Schicht mit Barriereadditiven, insbesondere Sauerstofffängern, Nanoclays oder UV-Blockern, aufweisen, sehr einfach herstellbar. Alternativ oder in Ergänzung dazu können auch Preform mit wenigstens einer Barriereschicht gegen Sauerstoff und/oder UV Strahlung und/oder einer Gleitbeschichtung und/oder einer Restentleerungsbeschichtung sehr einfach extrudiert werden. Der mehrschichtig extrudierte Preform kann auch wenigstens eine Schicht aus rezykliertem Kunststoffmaterial aufweisen. Der Extrusionsprozess ermöglicht es auch, den Preform wenigstens bereichsweise mit einer unterschiedlichen Farbschicht zu versehen. Dabei kann ein variabler Farbverlauf eingestellt werden oder es kann sogar ein gestreifter Preform hergestellt werden. Der Preform kann mit einem im Körperabschnitt axial verlaufenden transparenten Sichtstreifen hergestellt werden. Dieser kann dann am fertig streckgeblasenen Kunststoffbehälter beispielsweise als ein Füllstandskontrolle dienen.

Schliesslich erlaubt die Herstellung des Preforms in einem Quasi-Extrusionsblasprozess auch eine sehr einfache und kostengünstige Herstellung von Preforms für Weithalsflaschen. Derartige Preforms weisen beispielsweise einen Halsabschnitt mit einem über die Aussengewindeabschnitte gemessenen Aussendurchmesser von grösser als 48 mm, vorzugsweise von 48 mm bis 300mm auf. Wegen der beim Spritzgiessverfahren auftretenden hohen Drücke können im Spritzgiesswerkzeug oft nur wenige Kavitäten angeordnet werden, da sonst die erforderlichen Schliesskräfte zu gross werden. Dies verteuert die Herstellung derartiger Preforms. Im erfindungsgemässen Quasi-Extrusionsblas-verfahren können derartige Preforms jedoch vergleichsweise kostengünstig hergestellt werden.

Die erfindungsgemässen, quasi-extrusionsgeblasenen Preforms sind zur Herstellung von Kunststoffbehälter, insbesondere Kunststoffflaschen, in einem Einstufen- oder Zweistufen-Streckblasprozess. Unter einem Einstufen-Streckblasprozess wird dabei ein Verfahren verstanden, bei dem die Preforms unmittelbar nach ihrer Herstellung in die endgültige Form gebracht werden. Beim Zweistufen-Streckblasprozess erfolgt die Herstellung der Preforms zeitlich und räumlich getrennt vom Streckblasprozess, und die hergestellten Preforms werden bis zur ihrer Verwendung zwischengelagert.

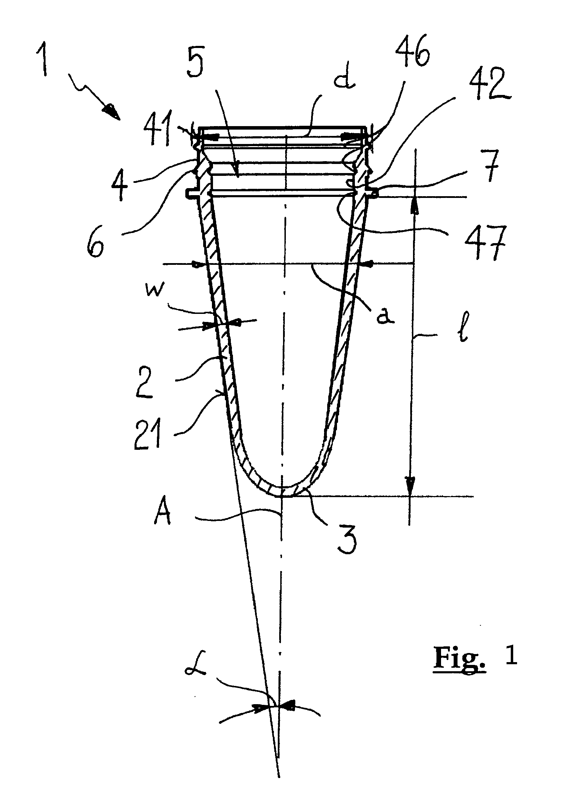

## Patentansprüche

1. Preform zur Herstellung von Kunststoffbehältern in einem Streckblasprozess, der einen Halsabschnitt (4) und einen daran anschliessenden, mit einem Preformboden (3) verschlossenen Körperabschnitt (2) aufweist, die durch einen von der Aussenwandung des Preforms (1) abragenden Stützring (7) voneinander getrennt sind, **dadurch gekennzeichnet, dass** der Preform in einem Quasi-Extrusionsblasprozess hergestellt ist, und der Körperabschnitt (2) einen Aussendurchmesser (a) aufweist, der vom Stützring (7) in Richtung des Preformbodens (3) verjüngt ausgebildet ist.

2. Preform nach Anspruch 1, **dadurch gekennzeichnet, dass** der Körperabschnitt (2) des Preforms (1) eine axiale Länge (I) aufweist, die etwa das 0,3-fache bis etwa 8-fache eines Aussendurchmessers (d) seines Halsabschnittes (4) beträgt.

3. Preform nach Anspruch 1 oder 2, **dadurch gekennzeichnet, dass** sich der Aussendurchmesser (a) des Körperabschnitts (2) in Richtung des Preformbodens (3) stetig verjüngt.

4. Preform nach Anspruch 3, **dadurch gekennzeichnet, dass** die Aussenwandung (21) des Körperabschnitts (2) mit der Preformachse (A) einen Winkel (α) von 0,5° bis 5° einschliesst.

5. Preform nach einem der vorangehenden Ansprüche, **dadurch gekennzeichnet, dass** der Körperabschnitt (2) eine mittlere Wandstärke (w) von 0,4 mm bis 4 mm, vorzugsweise 1,8 mm bis 2,8 mm aufweist.

6. Verfahren zur Herstellung eines Preforms gemäss einem der vorangehenden Ansprüche, bei dem ein ein- oder mehrschichtiger Kunststoffschlauch extrudiert und gemäss der Formkavität einer Blasform zu einem Preform (1) mit einem Halsabschnitt (4) und einem daran anschliessenden, mit einem Preformboden (3) verschlossenen Körperabschnitt (2), die durch einen von der Aussenwandung des Preforms abragenden Stützring (7) voneinander getrennt sind, ausgebildet und entformt wird, **dadurch gekennzeichnet, dass** der Preform allein in einem Quasi-Extrusionsblasprozess geformt wird, bei dem der von der Formkavität umschlossene Kunststoffschlauch zur Ausbildung des Körperabschnitts mit einem Aussendurchmesser, der vom Stützring in Richtung des Preformbodens verjüngt ausgebildet ist, mit einem Stützdruck gegen die Forminnenwandungen gedrückt wird.

7. Verfahren nach Anspruch 6, **dadurch gekennzeichnet, dass** der Stützdruck 0,1 bar bis 8 bar beträgt.

8. Verwendung eines extrusionsgeblasenen Preforms (1) gemäss einem der Patentansprüche 1 bis 5 zur Herstellung eines Kunststoffbehälters, insbesondere einer Kunststoffflasche, in einem Einstufen oder Zweistufen-Streckblasprozess.

## Claims

1. A preform for producing plastic containers in a stretch blow molding process, which has a neck section (4) and an adjoining body section (2) which is closed with a preform bottom (3), which are separated from one another by a supporting ring (7) which protrudes from the outside wall of the preform (1), **characterized in that** the preform is produced in a quasi-extrusion blow molding process and the body section (2) has an outside diameter (a) which is made tapered from the supporting ring (7) in the direction of the preform bottom (3).

2. The preform as claimed in Claim 1, wherein the body section (2) of the preform (1) has an axial length (1) which is roughly 0.3 times to roughly 8 times the outside diameter (d) of its neck section (4).

3. The preform as claimed in Claim 1 or 2, wherein the outside diameter (a) of the body section (2) tapers continually in the direction of the preform bottom (3).

4. The preform as claimed in Claim 3, wherein the outside wall (21) of the body section (2) includes an angle (α) of 0.5° to 5° with the preform axis (A).

5. The preform as claimed in one of the preceding claims, wherein the body section (2) has an average wall thickness (w) of 0.4 to 4 mm, preferably 1.8 mm to 2.8 mm.

6. A method for producing a preform as claimed in one of the preceding claims, in which single-layer or multilayer plastic tubing is extruded and is formed according to the blow mold cavity into a preform (1) with a neck section (4) and a following body section (2) which is closed with a preform bottom (3), which are separated from one another by a supporting ring (7) which protrudes from the outside wall of the preform, and is removed from the mold, **characterized in that** the preform is shaped solely in a quase-extrusion blow molding process, in which the plastic tubing surrounded by the mold cavity for forming the body section with an outside diameter which is made tapered from the supporting ring in the direction of the preform bottom is pressed with a support pressure against the inside walls of the mold.

7. The method as claimed in Claim 6, wherein the support pressure is 0.1 bar to 8 bar.

8. Use of an extrusion blow molded preform (1) as claimed in one of Claims 1 to 5 for producing a plastic container, especially a plastic bottle, in a single-stage or two-stage stretch blow molding process.

## Revendications

1. Préforme pour la fabrication de récipients en matière plastique selon un procédé d'étirage-soufflage, laquelle présente une partie de col (4) et, lui faisant suite, une partie de corps (2) fermée par un fond de préforme (3), lesquelles sont séparées l'une de l'autre par une collerette d'appui (7) qui fait saillie sur la paroi extérieure de la préforme (1), **caractérisée en ce que** la préforme est fabriquée selon un procédé de quasi-extrusion-soufflage, et la partie de corps (2) présente un diamètre extérieur (a) qui diminue de la collerette d'appui (7) vers le fond de préforme (3).

2. Préforme selon la revendication 1, **caractérisée en ce que** la partie de corps (2) de la préforme (1) présente une longueur axiale (1) qui correspond à environ 0,3 fois à environ 8 fois un diamètre extérieur (d) de sa partie de col (4).

3. Préforme selon la revendication 1 ou 2, **caractérisée en ce que** le diamètre extérieur (a) de la partie de corps (2) diminue continuellement vers le fond de préforme (3).

4. Préforme selon la revendication 3, **caractérisée en ce que** la paroi extérieure (21) de la partie de corps (2) forme un angle (α) de 0,5° à 5° avec l'axe (A) de la préforme.

5. Préforme selon l'une des revendications précédentes, **caractérisée en ce que** la partie de corps (2) présente une épaisseur de paroi moyenne (w) de 0,4 mm à 4 mm, de préférence de 1,8 mm à 2,8 mm.

6. Procédé de fabrication d'une préforme selon l'une des revendications précédentes, dans lequel un tuyau en matière plastique mono- ou multicouche est extrudé et formé conformément à la cavité de moulage d'un moule de soufflage en une préforme (1) présentant une partie de col (4) et, lui faisant suite, une partie de corps (2) fermée par un fond de préforme (3), lesquelles sont séparées l'une de l'autre par une collerette d'appui (7) qui fait saillie sur la paroi extérieure de la préforme, puis est démoulé, **caractérisé en ce que** la préforme seule est formée selon un procédé de quasi-extrusion-soufflage lors duquel le tuyau en matière plastique entouré par la cavité de moulage est poussé contre les parois intérieures du moule par une pression d'appui pour former la partie de corps avec un diamètre extérieur qui diminue de la collerette d'appui vers le fond de préforme.

7. Procédé selon la revendication 6, **caractérisée en ce que** la pression d'appui est comprise entre 0,1 bar et 8 bars.

8. Utilisation d'une préforme (1) extrudée soufflée selon l'une des revendications 1 à 5 pour fabriquer un récipient en matière plastique, en particulier une bouteille en matière plastique, dans un procédé d'étirage-soufflage en une étape ou en deux étapes.
